# EUROPÄISCHE PATENTSCHRIFT

(11) **EP 2 449 279 B1**
(45) Veröffentlichungstag und Bekanntmachung des Hinweises auf die Patenterteilung: **05.06.2013**
(21) Anmeldenummer: 10726130.7
(22) Anmeldetag: 30.06.2010
(51) Int. Cl.: F16D 23/06, F16D 23/02

(54) **SYNCHRONISIERVORRICHTUNG FÜR EIN SCHALTGETRIEBE**
SYNCHRONIZATION DEVICE FOR A MANUAL TRANSMISSION
DISPOSITIF DE SYNCHRONISATION POUR BOÎTE DE VITESSES À ENGRENAGES

(30) Priorität: 03.07.2009 DE 102009027438
(43) Veröffentlichungstag der Anmeldung: 09.05.2012
(73) Patentinhaber: ZF Friedrichshafen AG, 88038 Friedrichshafen (DE)
(72) Erfinder: DRABEK, Michael, 14776 Brandenburg (DE)
(86) Internationale Anmeldenummer: PCT/EP2010/059241
(87) Internationale Veröffentlichungsnummer: WO 2011/000849

(56) Entgegenhaltungen:
- DE-A1-102007 022 544
- DE-U1-202006 008 636
- JP-A- 2008 069 850
- US-A- 2 221 899

## Beschreibung

Die Erfindung betrifft eine Synchronisiervorrichtung für ein Schaltgetriebe mit einem Synchronkörper und wenigstens einem Synchronring, welche mittels einer Indexierung in Umfangsrichtung gegeneinander festlegbar sind, wobei die Indexierung aus mindestens einem an dem Synchronring angeordneten und sich im Wesentlichen in axialer Richtung erstreckenden Vorsprung gebildet ist, welcher in mindestens eine Ausnehmung des Synchronkörpers eingreift. Eine solche Synchronisiervorrichtung ist aus DE-A-10 2007 022 544 bekannt. Die Erfindung betrifft ferner ein Schaltgetriebe mit einer derartigen Synchronisiervorrichtung.

In Schaltgetrieben sind beim Einlegen eines Ganges zwei mit unterschiedlichen Drehzahlen drehende Teile mittels eines axial verschiebbaren dritten Teils zu koppeln. Die beiden drehenden Getriebeteile weisen jeweils eine Außenverzahnung auf, welche in eine Innenverzahnung des dritten Teils eingreifen. Das dritte Teil ist üblicherweise als Schiebemuffe ausgebildet, die über Koppelmittel mit einem fahrerseitigen Schalthebel verbunden und bei einer Betätigung des Schalthebels in axialer Richtung verschoben wird, so dass am Ende des Schaltvorgangs die beiden in Eingriff gelangenden Teile miteinander formschlüssig verbunden sind. Würde das axial verschiebbare Teil, dass zu Beginn des Schaltvorganges mit einem der beiden Teile über deren Verzahnungen in Eingriff steht, auf das andere noch mit einer anderen Drehzahl drehende Teil auftreffen, so käme es zu einem Übereinanderratschen der auftreffenden Verzahnungen, verbunden mit einer ungewollten Geräuschbildung und gegebenenfalls einer Beschädigung der Verzahnungen. Dies wird üblicherweise durch die Nutzung einer Synchronisiervorrichtung vermieden. Die Synchronisiervorrichtung bringt die beiden miteinander zu koppelnden Teile zuerst auf eine im Wesentlichen gleiche Drehzahl. Erst danach wird das verschiebbare Teil axial verschoben und die formschlüssige Kopplung der beiden Teile über das dritte Teil hergestellt.

Die Synchronisierung erfolgt üblicherweise mit Hilfe wenigstens eines Synchronringes, welcher zwischen den beiden zu koppelnden Teilen, nämlich dem Gangrad bzw. Losrad und dem Synchronkörper, angeordnet ist. Der Synchronring steht einerseits in Drehmitnahme mit dem Synchronkörper und bildet andererseits mit dem Gangrad eine Reibkupplung. Die Synchronisierung erfolgt, indem über das axial verschiebbare Teil, nämlich die Schiebemuffe, der Synchronring mit seiner Reibfläche gegen die korrespondierende Reibfläche des Gangrades gedrückt wird und damit die gemeinsame Reibkupplung geschlossen wird. Der Synchronring liegt dazu an dem Synchronkörper in Sperrstellung an, d.h. Synchronring und Synchronkörper sind formschlüssig miteinander verbunden. Hierzu weist der Synchronring wenigstens einen sich im Wesentlichen in axialer Richtung erstreckenden Vorsprung auf, welcher in eine entsprechende Aufnahmeöffnung des Synchronkörpers eingreift. Diese formschlüssige Verbindung wird üblicherweise auch als Indexierung bezeichnet. Nachdem der Synchronkörper und der Synchronring zueinander in Sperrstellung gebracht sind, findet der Aufbau der Reibverbindung zwischen dem Synchronring und dem Gangrad statt. Eine solche gattungsbildende Synchronisiervorrichtung ist aus der DE 10 2006 060 535 A1 bekannt.

Es hat sich gezeigt, dass die bei einem Schaltvorgang zur Verfügung stehende Zeit für den Reibwertaufbau zwischen den Reibflächen von Synchronring und Gangrad häufig nicht ausreicht. In diesen Fällen ist die Synchronisierung noch nicht abgeschlossen, wenn es zum Einkuppeln der Schiebemuffe an dem Gangrad kommt, verbunden mit einer ungewollten Geräuschbildung und gegebenenfalls einer Beschädigung der Verzahnungen von Schiebemuffe und Gangrad.

Der Erfindung liegt daher die Aufgabe zugrunde, eine Synchronisiervorrichtung mit den eingangs genannten Merkmalen vorzuschlagen, bei der während des Synchronisiervorgangs dem Synchronring aufgrund konstruktiver Merkmale mehr Zeit gegeben wird, um gegenüber der Reibfläche des Kupplungskörpers bzw. des Gangrades ein Reibmoment aufzubauen.

Zur Lösung dieser Aufgabe wird eine Synchronisiervorrichtung vorgeschlagen, welche die in Anspruch 1 genannten Merkmale aufweist. Ferner wird ein Schaltgetriebe mit einer erfindungsgemäßen Synchronisiervorrichtung vorgeschlagen. Vorteilhafte Ausgestaltungen der Erfindung finden sich in den Unteransprüchen.

Die erfindungsgemäße Synchronisiervorrichtung ist für den Einsatz in einem Schaltgetriebe, wie beispielsweise dem Schaltgetriebe eines Kraftfahrzeugs, geeignet. Die Synchronisiervorrichtung weist einen Synchronkörper und wenigstens einen Synchronring auf, welche mittels einer Indexierung in Umfangsrichtung gegeneinander festlegbar sind. Die Indexierung ist aus mindestens einem an den Synchronring angeordneten und sich im Wesentlichen in axialer Richtung erstreckenden Vorsprung gebildet, welcher in mindestens eine Ausnehmung des Synchronkörpers eingreift. Bevorzugt hat der Synchronring wenigstens drei derartiger Vorsprünge und an dem Synchronkörper sind wenigstens drei entsprechende Ausnehmungen bzw. Aufnahmen für den Vorsprung vorgesehen.

Erfindungsgemäß weist die zumindest eine Ausnehmung am Synchronkörper wenigstens einen schrägen Flächenabschnitt auf, an dem der Vorsprung bei einer Verdrehung des Synchronringes relativ zum Synchronkörper gleitend aufliegt.

Durch diese konstruktive Maßnahme wird dem Synchronring bei einem Schaltvorgang mehr Zeit gegeben, um gegenüber der Reibfläche des mit dem Synchronring eine Reibkupplung bildenden Kupplungskörpers ein Reibmoment aufzubauen, indem beim Synchronvorgang eine gewisse Verdrehung des Synchronringes gegenüber dem Synchronkörper zugelassen wird.

Durch den schrägen Flächenabschnitt der Ausnehmung des Synchronkörpers gleitet der Vorsprung des Synchronringes entlang des schrägen Flächenabschnitts radial nach außen. Es ist durch die erfindungsgemäße Maßnahme daher auch erreicht, dass der vergleichsweise lose im Radsatz angeordnete Synchronring ohne Zwangsführung eng eingepasst mit dem Synchronkörper gekoppelt werden kann und somit etwaiges Klappern oder dergleichen Geräuschbildung vermieden ist, wenn eine Synchronisierung nicht stattfindet.

Durch das Gleiten des Vorsprungs an dem schrägen Flächenabschnitt der Ausnehmung ist ferner ein relativ geringes Losbrechmoment erforderlich, um die Reibfläche des Synchronringes von dem Reibkonus des Kupplungskörpers zu trennen. Auch ist das Entsperrmoment reduziert, das heißt, dass der Synchronring gegenüber dem Synchronkörper sich mit wenigerem Widerstand als bisher in seine so genannte "Neutral"-Stellung bringen lässt.

Nach einer ersten Ausgestaltung der Erfindung ist vorgesehen, dass der Synchronkörper wenigstens einen Anschlag aufweist, gegen den der Synchronring bei einer Verdrehung relativ zum Synchronkörper anschlagbar ist. Hierdurch kann der Synchronring an dem Synchronkörper in Umfangsrichtung durch Formschluss festgelegt werden, indem der Synchronring bei seiner Drehbewegung an dem Synchronkörper anschlägt.

Es bietet sich an, dass der Anschlag durch wenigstens einen Wandungsabschnitt der Aufnahme des Synchronkörpers gebildet ist, gegen welchen ein Wandungsabschnitt des Vorsprungs des Synchronrings anschlagbar ist. Hierdurch kann der Anschlag auf besonders einfache Weise realisiert werden, da auf die sowieso bereits vorliegenden Wandungsabschnitte der Aufnahme am Synchronkörper und die Gegenflächenabschnitte des Vorsprungs des Synchronrings zurückgegriffen wird.

Es bietet sich ferner an, dass in Umfangsrichtung gesehen, der Anschlag und der schräge Flächenabschnitt des Synchronkörpers hintereinander liegend angeordnet sind. Dadurch ist in konstruktiv einfacher Weise realisiert, dass der Vorsprung an dem wenigstens einen schrägen Flächenabschnitt entlang gleitet und dann gegen den Anschlag stößt, und somit eine formschlüssige Drehverbindung zwischen Synchronring und Synchronkörper erzeugbar ist.

Mit Vorteil kann weiterhin vorgesehen sein, dass der Flächenabschnitt der Ausnehmung derart schräg angeordnet ist, dass im Betrieb der Synchronisiervorrichtung eine Selbsthemmung zwischen dem Flächenabschnitt und dem Vorsprung des Synchronrings vermieden ist. Dadurch ist gewährleistet, dass der Synchronring nach einer Reduzierung des verdrehenden Momentes wieder in die "Neutral"-Stellung zurückkehrt, insbesondere der in die Ausnehmung eingreifende Vorsprung, in Umfangsrichtung gesehen, in die "Neutral"-Stellung zurück gleitet.

Alternativ dazu kann es auch vorgesehen sein, dass der Flächenabschnitt der Ausnehmung derart schräg angeordnet ist, dass bei Einwirkung eines Verdrehmoments der Vorsprung des Synchronringes unter Selbsthemmung an dem Flächenabschnitt anliegt und bei Wegfall oder Reduzierung des Verdrehmoments in seine Neutralstellung zurückkehrt. Dadurch ist die Indexierung bzw. Festlegung des Synchronringes gegenüber dem Synchronkörper bereits durch die auf diese Weise realisierte kraftschlüssige, insbesondere reibschlüssige Verbindung vorgenommen. Dadurch können bauteilbelastende Stöße vermieden werden, welche beispielsweise bei einer formschlüssigen Verbindung und einer relativ großen Drehzahldifferenz der beiden zu koppelnden Getriebeteile auftreten.

Nach einer weiteren Ausgestaltung der Erfindung ist vorgesehen, dass der Vorsprung des Synchronringes wenigstens einen mit dem schrägen Flächenabschnitt des Synchronkörpers zumindest teilweise korrespondierenden Flächenabschnitt aufweist. Durch die geometrisch korrespondierende Fläche an dem Vorsprung des Synchronringes wird der Synchronisiervorgang unterstützt und erleichtert. Auch ist ein Gleiten des Vorsprunges an der schrägen Fläche der Ausnehmung auf diese Weise besonders bauteilschonend und verschleißmindernd möglich.

Der korrespondierende schräge Flächenabschnitt des Vorsprunges kann in herstellungstechnisch einfacher Weise durch eine Fase hergestellt sein.

Nach einer bevorzugten Ausführungsform der Erfindung sind zwei schräge Flächenabschnitte je Aufnahmeöffnung am Synchronkörper vorgesehen, von denen der eine Flächenabschnitt bei einem Verdrehen des Synchronrings gegenüber dem Synchronkörper in die eine Drehrichtung und der andere Flächenabschnitt bei einem Verdrehen des Synchronringes in die andere Drehrichtung mit dem Vorsprung des Synchronrings zusammenwirkt. Bevorzugt gleitet dabei der Vorsprung des Synchronrings je nach seiner Drehrichtung gegenüber dem Synchronkörper entlang der einen schrägen Fläche oder der anderen schrägen Fläche radial nach außen.

Es bietet sich an, dass die schrägen Flächen der Aufnahmeöffnung am Synchronkörper mit ihren radial nach innen liegenden Enden einander zugewandt sind, vorzugsweise zueinander beabstandet sind. Es bietet sich ferner an, dass in der "Neutral"-Stellung des Synchronringes sich der Vorsprung des Synchronringes und die schräge Flächenabschnitte in Umfangsrichtung überlappen. Dadurch kann der rotatorische Freiheitsgrad des Vorsprungs in der Aufnahme flexibel und unabhängig von der relativen Drehrichtung des Synchronringes gegenüber dem Synchronkörper eingestellt werden. Der Vorsprung des Synchronringes ist damit in der Aufnahme des Synchronkörpers besonders sicher gehalten und daher ein sicheres Gleiten des Vorsprunges in der Aufnahme des Synchronkörpers gewährleistet.

Die erfindungsgemäße Synchronisiervorrichtung kann bei einer Einfachsynchronisierung oder Mehrfachsynchronisierung, vorzugsweise bei einer Zweifach- oder Dreifachsynchronisierung, genutzt werden, welches anhand von Ausführungsbeispielen beschrieben wird. Unter einer Einfachsynchronisierung ist im Sinne der Erfindung zu verstehen, dass die Reibkupplung der Synchronisiervorrichtung durch ein Reibpaar realisiert ist. Bei einer Mehrfachsynchronisierung sind entsprechend mehrfache Reibpaare, beispielsweise zwei Reibpaare bei einer Zweifachsynchronisierung oder drei Reibpaare bei einer Dreifachsynchronisierung, vorgesehen.

Die erfindungsgemäße Synchronisiervorrichtung findet bevorzugten Einsatz in einem Schaltgetriebe, insbesondere einem Schaltgetriebe für ein Kraftfahrzeug.

Die Erfindung wird im Folgenden anhand der beiliegenden Zeichnung an einem Ausführungsbeispiel näher erläutert. Darin zeigt
- Fig. 1: eine Ausführungsform einer Synchronisiervorrichtung für ein Schaltgetriebe in einer Schnittdarstellung im Bereich der Indexierung der Synchronisiervorrichtung,
- Fig. 2: einen Ausschnitt eines Synchronkörpers der Synchronisiervorrichtung gemäß Fig. 1 in perspektivischer Darstellung,
- Fig. 3: einen Ausschnitt eines Synchronringes der Synchronisiervorrichtung gemäß Fig. 1 in perspektivischer Darstellung,
- Fig. 4: eine Synchronisiervorrichtung mit Einfachsynchronisierung in Schnittdarstellung, und
- Fig. 5: eine Synchronisiervorrichtung mit Dreifachsynchronisierung in Schnittdarstellung.

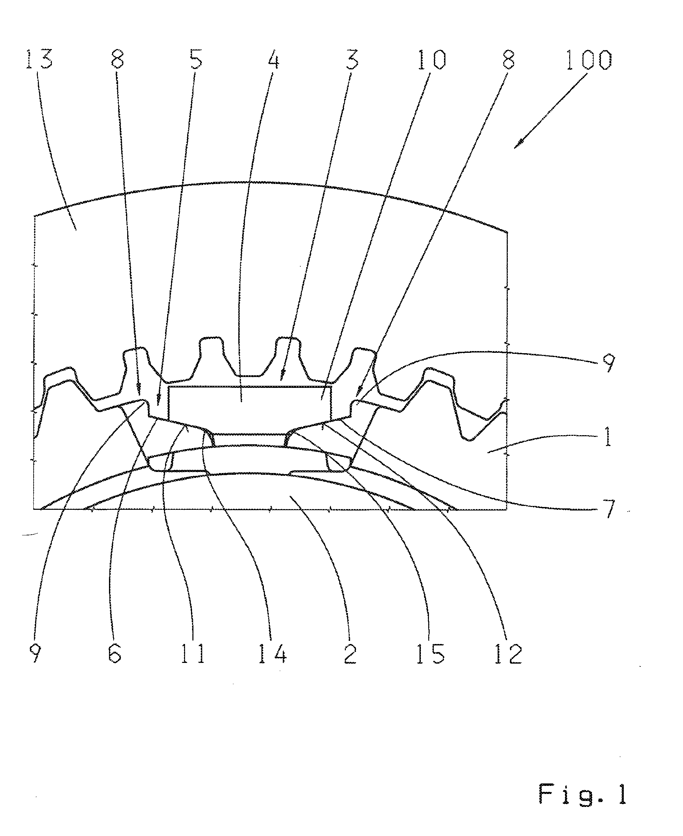

Fig. 1 zeigt demnach in schematischer Darstellungsweise eine Synchronisiervorrichtung 100, welche beispielsweise in einem Schaltgetriebe eines Kraftfahrzeuges zum Einsatz kommen kann. Die Synchronisiervorrichtung 100 weist einen Synchronkörper 1 und wenigstens einen Synchronring 2 mit einer Sperrverzahnung 17 auf, welche mittels einer geometrischen Indexierung 3 in Umfangsrichtung gegeneinander festlegbar sind. Die Indexierung 3 ist durch zumindest einen an dem Synchronring 2 angeordneten und sich im Wesentlichen in axialer Richtung erstreckenden Vorsprung 4 gebildet, welcher in eine Ausnehmung 5 bzw. Aufnahme des Synchronkörpers 1 eingreift. Der zumindest eine Vorsprung 4 ist in an sich bekannter Weise einstückig mit dem Synchronring 2 verbunden.

Die Synchronisiervorrichtung 100 weist ferner eine Schiebemuffe 13 auf, welche mit dem Stellglied eines Aktuators oder dem fahrerseitigen Schalthebel wie eingangs geschildert gekoppelt ist. Beim Schalten eines Getriebegangs wird die Schiebemuffe in axialer Richtung der (nicht dargestellten) Getriebewelle verschoben und die Kopplung mit dem (nicht dargestellten) Gangrad des Schaltgetriebes herbeiführt. In Fig. 1 ist die Schiebemuffe 13 in einer Stellung gezeigt, in welcher sie mit der Außenverzahnung des Synchronkörpers 1 kämmt.

Die axiale Ausnehmung 5 des Synchronkörpers 1 weist einen schrägen Flächenabschnitt 6 auf, auf dem der Vorsprung 4 des Synchronringes 2 bei einer Verdrehung desselben relativ zum Synchronkörper 1 aufliegt und über einen vorgegebenen Drehwinkel auf diesem gleitet. Die Ausnehmung 5 weist auf der umfangsbezogen gegenüber liegenden Seite des Vorsprungs 4 einen weiteren schrägen Flächenabschnitt 7 auf, an dem der Vorsprung 4 bei einer Verdrehung des Synchronringes 2 relativ zum Synchronkörper 1 aufliegt und über einen vorgegebenen Drehwinkel auf diesem gleitet. Die schrägen Flächenabschnitte 6, 7 sind dabei in der Weise ausgebildet bzw. angeordnet, dass der eine Flächenabschnitt 6 bei einem Verdrehen des Synchronringes gegenüber dem Synchronkörper 1 in die eine Drehrichtung und der andere Flächenabschnitt 7 bei einem Verdrehen des Synchronringes 2 in die andere Drehrichtung mit dem Vorsprung 4 zusammenwirkt.

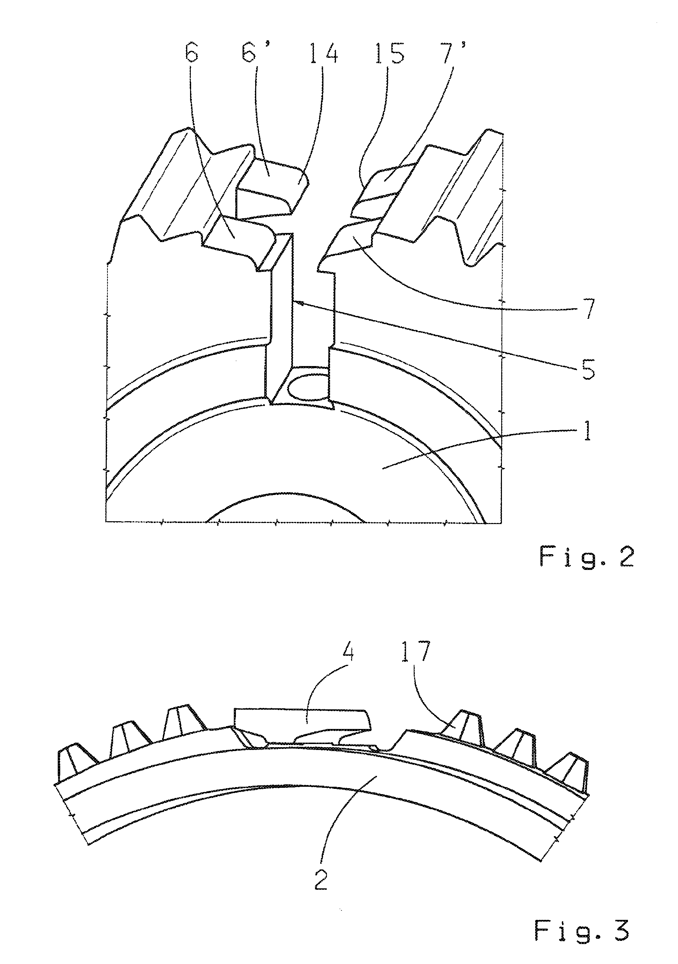

Wie Fig. 3 und insbesondere Fig. 1 zeigen, weist der Vorsprung 4 des Synchronringes 2 an seiner radial nach innen gerichteten Unterseite, welche den schrägen Flächenabschnitten 6, 7 der Ausnehmung 5 zugewandt ist, zwei schräge Flächenabschnitte bzw. Fasen 11, 12 auf, welche mit den jeweiligen schrägen Flächenabschnitten 6, 7 der Ausnehmung 5 korrespondieren. Die zueinander korrespondierenden Flächenabschnitte 6, 11 und 7, 12 stehen in einem Winkel zu einer gedachten tangential an den Synchronkörper 1 angreifenden Fläche derart, dass eine Selbsthemmung zwischen den aneinander gleitenden Flächenabschnitten 6, 11 und 7, 12 in der jeweiligen Drehrichtung des Synchronringes 2 gegenüber dem Synchronkörper 1 vermieden ist.

Der Synchronkörper 1 weist wenigstens einen Anschlag 8 auf, gegen den der Vorsprung 4 des Synchronringes 2 bei einer Verdrehung relativ zum Synchronkörper 1 anschlagbar ist. Der Anschlag 8 ist dabei durch wenigstens einen Wandungsabschnitt 9 der Ausnehmung 5 des Synchronkörpers 1 gebildet, gegen welchen ein Gegenflächenabschnitt 10 des Vorsprunges 4 anschlagbar ist. Bei der Ausführungsform gemäß Fig. 1 sind zwei Anschläge 8 vorgesehen, welche durch die jeweiligen Seitenwandungen 9 der Ausnehmung 5 des Synchronkörpers 1 gebildet sind. Je nach Drehrichtung des Synchronringes 2 gegenüber dem Synchronkörper 1 schlägt der Vorsprung 4 mit seiner der Seitenwandung 9 der Ausnehmung 5 zugewandten Seite 10 gegen den An_schlag 8 an, wenn ein bestimmter Verdrehwinkel überschritten wurde.

Der Synchronkörper 1 weist bevorzugt drei über den Umfang gleichverteilt angeordnete Aufnahmen 5 bzw. Nuten auf, in welchen sich die Vorsprünge 4 des Synchronringes 2 abstützen. Die Ausnehmungen 5 sind dabei so ausgeführt, dass die Vorsprünge 4 des Synchronringes 2, welche auch als Indexlaschen bezeichnet werden, über den schrägen Flächenabschnitt 6 bzw. 7 gleiten müssen, um in die Sperrstellung zu gelangen. Die Sperrstellung ist erreicht, wenn der Vorsprung 4 am Ende des schrägen Flächenabschnitts 6 bzw. 7 an den Anschlag 8 stößt.

Wie insbesondere aus Fig. 2 ersichtlich ist, sind die schrägen Flächenabschnitte 6, 7 mit ihren radial innenliegenden Enden 14, 15 einander zugewandt, wobei die Enden 14, 15 in einem Abstand zueinander liegen. Der Abstand der schrägen Flächenabschnitte 6, 7 ist dabei in der Weise gewählt, dass sich der Vorsprung 4 und die schrägen Flächenabschnitte 6, 7 in der "Neutral"-Stellung des Synchronringes 2 in Umfangsrichtung gegenüber dem Synchronkörper 1 überlappen.

Ferner zeigt Fig. 2, dass der Synchronkörper 1 in axialer Richtung bevorzugt jeweils zwei nebeneinander liegende schräge Flächenabschnitte 6, 6' bzw. 7, 7' aufweist, an dem der jeweilige Vorsprung 4 des Synchronringes 2 bei einer Verdrehung des Synchronringes 2 relativ zum Synchronkörper 1 gleitet.

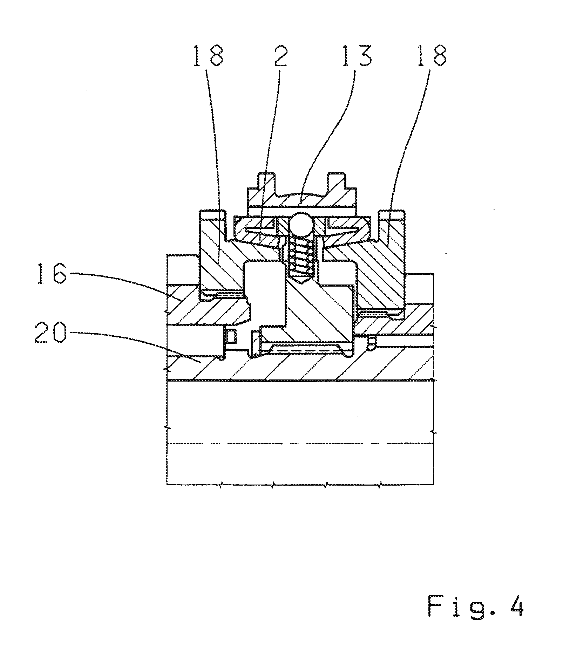

Die Synchronvorrichtung 100 kann als Einfachsynchronisierung oder Mehrfachsynchronisierung ausgebildet sein. Fig. 4 zeigt die Synchronisiervorrichtung 100 angeordnet auf einer Getriebewelle 20, wobei die Synchronisiervorrichtung 100 in diesem Ausführungsbeispiel als Einfachsynchronisierung ausgebildet ist. Hierzu ist ein einziger Synchronring 2 vorhanden, dessen konische Reibfläche unter Einfluss der Schiebemuffe 13 mit der dazu korrespondierenden konischen Reibfläche des Kupplungskörpers 18 des benachbarten Getrieberad 16 zusammenwirkt.

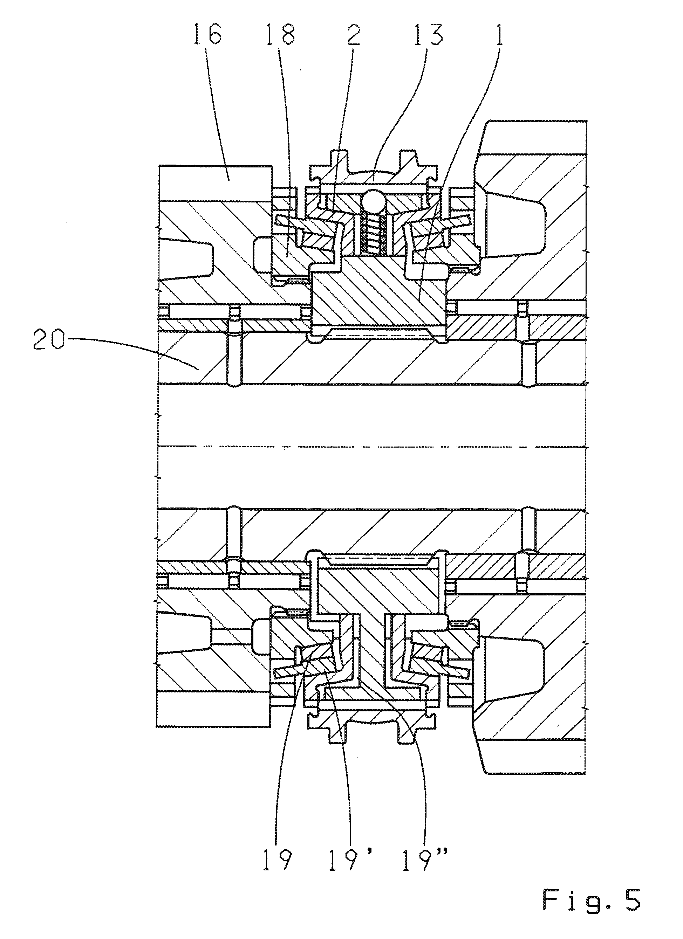

Fig. 5 zeigt eine weitere Ausführungsform der Synchronisiervorrichtung 100, welche als Dreifach-Synchronisierung ausgebildet ist. Es sind dort drei miteinander in Wirkstellung tretende Reibpaarungen 19, 19', 19" vorhanden, um die Reibkupplung zwischen dem Getrieberad 16 und dem Synchronkörper 1 herzustellen.

Durch die erfindungsgemäße Synchronisiervorrichtung 100 kann das Schaltgetriebe so ausgeführt werden, dass die Sperrverzahnung 17 des Synchronringes 2 optimal auf vorgegebene Schaltkomfortanforderungen konstruiert werden kann, da lediglich ein kleines Losbrechmoment notwendig ist, um die in Kontakt befindlichen Reibflächen 6, 11; 7, 12 voneinander zu trennen. Den Rest des Entsperrvorgangs erledigt der Synchronring 2 über die Federwirkung des Vorsprunges 4 an dem schrägen Flächenabschnitt 6, 7 selbst. Da für diesen Fall kein großer Umschlagwinkel notwendig ist, kann der jeweilige Vorsprung 4 des Synchronrings 2 in der "Neutral"-Stellung so nahe an die schrägen Flächenabschnitte 6, 7 der Ausnehmung 5 des Synchronkörpers 1 geführt werden, dass der rotatorische Freiheitsgrad so weit eingeschränkt ist, dass lediglich bei Berücksichtigung von Drehungleichförmigkeiten ein Anschlagen des Synchronringes 2 an dem Synchronkörper 1 vermieden wird. Die erfindungsgemäße Synchronisiervorrichtung dient der Verbesserung der Vorsynchronisierung eines Schaltgetriebes und vermeidet außerdem etwaige Rasselgeräusche beim Synchronvorgang.

### Bezugszeichen

- 1: Synchronkörper
- 2: Synchronring
- 3: Indexierung
- 4: Vorsprung
- 5: Ausnehmung, Aufnahme
- 6, 6': Flächenabschnitt der Ausnehmung
- 7, 7': Flächenabschnitt der Ausnehmung
- 8: Anschlag
- 9: Wandungsabschnitt der Ausnehmung
- 10: Wandungsabschnitt des Vorsprungs
- 11: Flächenabschnitt des Vorsprungs
- 12: Flächenabschnitt des Vorsprungs
- 13: Schiebemuffe
- 14: Ende
- 15: Ende
- 16: Getrieberad
- 17: Sperrverzahnung des Synchronrings
- 18: Kupplungskörper
- 19: Reibpaarung
- 19': Reibpaarung
- 19": Reibpaarung
- 20: Getriebewelle
- 100: Synchronisiervorrichtung

## Patentansprüche

1. Synchronisiervorrichtung (100) für ein Schaltgetriebe mit einem Synchronkörper (1) und wenigstens einem Synchronring (2), welche mittels einer Indexierung (3) in Umfangsrichtung gegeneinander festlegbar sind, wobei die Indexierung (3) aus mindestens einem an dem Synchronring (2) angeordneten und sich im Wesentlichen in axiale Richtung erstreckenden Vorsprung (4) gebildet ist, welcher in mindestens eine Ausnehmung (5) des Synchronkörpers (1) eingreift, **dadurch gekennzeichnet, dass** die Ausnehmung (5) wenigstens einen schrägen Flächenabschnitt (6; 7) aufweist, auf dem der Vorsprung (4) bei einer Verdrehung des Synchronringes (2) relativ zum Synchronkörper (1) gleitend aufliegt.

2. Synchronisiervorrichtung nach Anspruch 1, **dadurch gekennzeichnet, dass** der Synchronkörper (1) einen Anschlag (8) aufweist, gegen welchen der Synchronring (2) bei einer Verdrehung relativ zum Synchronkörper (1) anschlagbar ist.

3. Synchronisiervorrichtung nach Anspruch 2, **dadurch gekennzeichnet, dass** der Anschlag (8) durch wenigstens einen Wandungsabschnitt (9) der Ausnehmung (5) des Synchronkörpers (1) gebildet ist, gegen welchen ein Wandungsabschnitt (10) des Vorsprunges (4) anschlagbar ist.

4. Synchronisiervorrichtung nach Anspruch 2 oder 3, **dadurch gekennzeichnet, dass** in Umfangsrichtung gesehen, der Anschlag (8) und ein schräger Flächenabschnitt (6; 7) hintereinander liegend angeordnet sind.

5. Synchronisiervorrichtung nach einem der vorherigen Ansprüche, **dadurch gekennzeichnet, dass** der schräge Flächenabschnitt (6; 7) derart schräg angeordnet ist, dass im Betrieb der Synchronisiervorrichtung (100) eine Selbsthemmung zwischen dem schrägen Flächenabschnitt (6; 7) und dem Vorsprung (4) vermieden ist.

6. Synchronisiervorrichtung nach einem der Ansprüche 1 bis 4, **dadurch gekennzeichnet, dass** der Flächenabschnitt (6; 7) der Ausnehmung (5) derart schräg angeordnet ist, dass bei Einwirkung eines Verdrehmoments der Vorsprung (4) des Synchronringes (2) unter Selbsthemmung an dem Flächenabschnitt (6; 7) anliegt und bei Wegfall oder Reduzierung des Verdrehmoments in seine Neutralstellung zurückkehrt.

7. Synchronisiervorrichtung nach einem der vorherigen Ansprüche, **dadurch gekennzeichnet, dass** der Vorsprung (4) des Synchronringes (2) wenigstens einen mit dem schrägen Flächenabschnitt (6; 7) des Synchronkörpers (1) zumindest teilweise korrespondierenden Flächenabschnitt (11; 12) aufweist.

8. Synchronisiervorrichtung nach Anspruch 7, **dadurch gekennzeichnet, dass** der schräge Flächenabschnitt des Vorsprungs (4) durch eine Fase (11; 12) gebildet ist.

9. Synchronisiervorrichtung nach einem der vorherigen Ansprüche, **dadurch gekennzeichnet, dass** zwei schräge Flächenabschnitte (6, 7) vorgesehen sind, von denen der eine Flächenabschnitt (6) bei einem Verdrehen des Synchronringes (2) gegenüber dem Synchronkörper (1) in die eine Drehrichtung und der andere Flächenabschnitt (7) bei einem Verdrehen des Synchronringes (2) in die andere Drehrichtung mit dem Vorsprung (4) des Synchronringes (2) zusammenwirkt.

10. Synchronisiervorrichtung nach Anspruch 9, **dadurch gekennzeichnet, dass** die schrägen Flächenabschnitte (6, 7) mit ihrem radial innenliegenden Enden (14, 15) einander zugewandt sind.

11. Synchronisiervorrichtung nach Anspruch 9 oder 10, **dadurch gekennzeichnet, dass** in der Neutralstellung des Synchronringes (2) gegenüber dem Synchronkörper (1) sich der Vorsprung (4) des Synchronringes (2) und die schrägen Flächenabschnitte (6, 7) im Umfangsrichtung überlappen.

12. Synchronisiervorrichtung nach einem der vorherigen Ansprüche, **dadurch gekennzeichnet, dass** in axialer Richtung gesehen wenigstens zwei hintereinander liegende schräge Flächenabschnitte (6, 6'; 7, 7') am Synchronkörper (1) zum Aufliegen des Vorsprung (4) des Synchronringes (2) vorgesehen sind.

13. Synchronisiervorrichtung nach einem der vorherigen Ansprüche, **dadurch gekennzeichnet, dass** die Synchronisiervorrichtung (100) zur EinfachSynchronisierung, zur Zweifach-Synchronisierung oder zur Dreifach-Synchronisierung ausgebildet ist.

14. Schaltgetriebe mit einer Synchronisiervorrichtung (100) nach einem der Ansprüche 1 bis 13.

## Claims

1. Synchronization device (100) for a manual gearbox with a synchronizing body (1) and at least one synchronizer ring (2) which can be fixed with respect to one another in the circumferential direction by means of an indexing means (3), the indexing means (3) being formed from at least one projection (4) which is arranged on the synchronizer ring (2), extends substantially in the axial direction and engages into at least one recess (5) of the synchronizing body (1), **characterized in that** the recess (5) has at least one oblique face section (6; 7), on which the projection (4) rests slidingly in the case of a rotation of the synchronizer ring (2) relative to the synchronizing body (1).

2. Synchronization device according to Claim 1, **characterized in that** the synchronizing body (1) has a stop (8), against which the synchronizer ring (2) can bear in the case of a rotation relative to the synchronizing body (1).

3. Synchronization device according to Claim 2, **characterized in that** the stop (8) is formed by at least one wall section (9) of the recess (5) of the synchronizing body (1), against which wall section (9) a wall section (10) of the projection (4) can bear.

4. Synchronization device according to Claim 2 or 3, **characterized in that**, as viewed in the circumferential direction, the stop (8) and an oblique face section (6; 7) are arranged so as to lie behind one another.

5. Synchronization device according to one of the preceding claims, **characterized in that** the oblique face section (6; 7) is arranged obliquely in such a way that a self-locking action between the oblique face section (6; 7) and the projection (4) is avoided during operation of the synchronization device (100).

6. Synchronization device according to one of Claims 1 to 4, **characterized in that** the face section (6; 7) of the recess (5) is arranged obliquely in such a way that, under the action of a twisting moment, the projection (4) of the synchronizer ring (2) bears with a self-locking action against the face section (6; 7) and, upon the removal or reduction of the twisting moment, returns into its neutral position.

7. Synchronization device according to one of the preceding claims, **characterized in that** the projection (4) of the synchronizer ring (2) has at least one face section (11; 12) which corresponds at least partially with the oblique face section (6; 7) of the synchronizing body (1).

8. Synchronization device according to Claim 7, **characterized in that** the oblique face section of the projection (4) is formed by a bevel (11; 12).

9. Synchronization device according to one of the preceding claims, **characterized in that** two oblique face sections (6, 7) are provided, of which one face section (6), in the case of a rotation of the synchronizer ring (2) with respect to the synchronizing body (1) in one rotational direction, and the other face section (7), in the case of a rotation of the synchronizer ring (2) in the other rotational direction, interacts with the projection (4) of the synchronizer ring (2).

10. Synchronization device according to Claim 9, **characterized in that** the oblique face sections (6, 7) face one another with their radially inner ends (14, 15).

11. Synchronization device according to Claim 9 or 10, **characterized in that**, in the neutral position of the synchronizer ring (2) with respect to the synchronizing body (1), the projection (4) of the synchronizer ring (2) and the oblique face sections (6, 7) overlap in the circumferential direction.

12. Synchronization device according to one of the preceding claims, **characterized in that**, as viewed in the axial direction, at least two oblique face sections (6, 6'; 7, 7') which lie behind one another are provided on the synchronizing body (1) for resting the projection (4) of the synchronizer ring (2).

13. Synchronization device according to one of the preceding claims, **characterized in that** the synchronization device (100) is configured for single synchronization, for double synchronization or for triple synchronization.

14. Manual gearbox having a synchronization device (100) according to one of Claims 1 to 13.

## Revendications

1. Dispositif de synchronisation (100) pour une boîte de vitesses comprenant un corps synchrone (1) et au moins une bague synchrone (2), lesquels peuvent être fixés l'un contre l'autre au moyen d'une indexation (3) dans la direction périphérique, l'indexation (3) étant réalisée à partir d'au moins une saillie (4) disposée sur la bague synchrone (2) et s'étendant essentiellement dans la direction axiale, laquelle saillie vient en prise dans au moins un évidement (5) du corps synchrone (1), **caractérisé en ce que** l'évidement (5) présente au moins une portion de surface oblique (6 ; 7), sur laquelle la saillie (4), dans le cas d'une rotation de la bague synchrone (2), repose de manière à pouvoir glisser par rapport au corps synchrone (1).

2. Dispositif de synchronisation selon la revendication 1, **caractérisé en ce que** le corps synchrone (1) présente une butée (8) contre laquelle la bague synchrone (2) peut venir buter lors d'une rotation par rapport au corps synchrone (1) .

3. Dispositif de synchronisation selon la revendication 2, **caractérisé en ce que** la butée (8) est formée par au moins une portion de paroi (9) de l'évidement(5) du corps synchrone (1), contre lequel une portion de paroi (10) de la saillie (4) peut venir buter.

4. Dispositif de synchronisation selon la revendication 2 ou 3, **caractérisé en ce que**, vu dans la direction périphérique, la butée (8) et une portion de surface oblique (6 ; 7) sont disposées de manière à être placées l'une derrière l'autre.

5. Dispositif de synchronisation selon l'une quelconque des revendications précédentes, **caractérisé en ce que** la portion de surface oblique (6 ; 7) est disposée obliquement de telle sorte que pendant le fonctionnement du dispositif de synchronisation (100), un auto-blocage entre la portion de surface oblique (6 ; 7) et la saillie (4) soit évité.

6. Dispositif de synchronisation selon l'une quelconque des revendications 1 à 4, **caractérisé en ce que** la portion de surface (6 ; 7) de l'évidement (5) est disposée obliquement de telle sorte que lors de l'application d'un couple de rotation, la saillie (4) de la bague synchrone (2) s'applique avec auto-blocage contre la portion de surface (5 ; 7) et revienne en arrière dans sa position neutre en l'absence du couple de rotation ou lors de sa réduction.

7. Dispositif de synchronisation selon l'une quelconque des revendications précédentes, **caractérisé en ce que** la saillie (4) de la bague synchrone (2) présente au moins une portion de surface (11 ; 12) correspondant au moins en partie à la portion de surface oblique (6 ; 7) du corps synchrone (1).

8. Dispositif de synchronisation selon la revendication 7, **caractérisé en ce que** la portion de surface oblique de la saillie (4) est formée par un biseau (11 ; 12).

9. Dispositif de synchronisation selon l'une quelconque des revendications précédentes, **caractérisé en ce que** deux portions de surface obliques (6, 7) sont prévues, l'une des portions de surface (6) coopérant lors d'une rotation de la bague synchrone (2) par rapport au corps synchrone (1) avec la saillie (4) de la bague synchrone (2) dans un sens de rotation, et l'autre portion de surface (7) coopérant lors d'une rotation de la bague synchrone (2) dans l'autre sens de rotation avec la saillie (4) de la bague synchrone (2).

10. Dispositif de synchronisation selon la revendication 9, **caractérisé en ce que** les portions de surface obliques (6, 7) sont tournées l'une vers l'autre avec leurs extrémités situées radialement à l'intérieur (14, 15).

11. Dispositif de synchronisation selon la revendication 9 ou 10, **caractérisé en ce que** dans la position neutre de la bague synchrone (2) par rapport au corps synchrone (1), la saillie (4) de la bague synchrone (2) et les portions de surface obliques (6, 7) se chevauchent dans la direction périphérique.

12. Dispositif de synchronisation selon l'une quelconque des revendications précédentes, **caractérisé en ce que**, vu dans la direction axiale, au moins deux portions de surface obliques situées l'une derrière l'autre (6, 6' ; 7, 7') sont prévues sur le corps synchrone (1) pour le support de la saillie (4) de la bague synchrone (2) .

13. Dispositif de synchronisation selon l'une quelconque des revendications précédentes, **caractérisé en ce que** le dispositif de synchronisation (100) est réalisé en vue d'une synchronisation simple, en vue d'une synchronisation double, ou en vue d'une synchronisation triple.

14. Boîte de vitesses comprenant un dispositif de synchronisation (100) selon l'une quelconque des revendications 1 à 13.
